(19) Europäisches Patentamt
European Patent Office
Office européen des brevets

(11) **EP 4 633 148 A1**

(12) **EUROPEAN PATENT APPLICATION**

(43) Date of publication:
**15.10.2025 Bulletin 2025/42**

(21) Application number: **24305551.4**

(22) Date of filing: **08.04.2024**

(51) International Patent Classification (IPC):
*H04N 19/117* (2014.01)     *H04N 19/139* (2014.01)
*H04N 19/159* (2014.01)     *H04N 19/176* (2014.01)
*H04N 19/513* (2014.01)     *H04N 19/593* (2014.01)
*H04N 19/625* (2014.01)     *H04N 19/82* (2014.01)

(52) Cooperative Patent Classification (CPC):
**H04N 19/117; H04N 19/139; H04N 19/159;
H04N 19/176; H04N 19/513; H04N 19/593;
H04N 19/625; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LEFEBVRE, Frederic**
  **35000 RENNES (FR)**
• **MARZUKI, Ismail**
  **MONTREAL, H3J 1V4 (CA)**
• **BOISSON, Guillaume**
  **35137 PLEUMELEUC (FR)**
• **BORDES, Philippe**
  **35890 LAILLE (FR)**

(74) Representative: **Interdigital**
**Immeuble ZEN 2**
**845 A, avenue des Champs Blancs**
**35510 Cesson-Sévigné (FR)**

(54) **ENCODING AND DECODING METHODS USING FILTERING WITH ADAPTIVE SIZE AND CORRESPONDING APPARATUSES**

(57)     A decoding method is disclosed. A block of reconstructed samples is obtained.

A filter size is selected based on coding information.

The block of reconstructed samples is filtered using a filter of selected filter size.

<u>**1500**</u>

Obtain a block of reconstructed samples — S1502

Select a filter size based on coding information (e.g., any one of a block size, a prediction mode, motion information and residual information) — S1504

Filter the block of reconstructed samples using the filter of selected size — S1506

**FIG. 15**

EP 4 633 148 A1

**Description**

TECHNICAL FIELD

At least one of the present embodiments generally relates to a method and an apparatus for encoding and decoding a picture block using filtering (e.g., bilateral filtering) with adaptive size.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In one implementation, a method for filtering a reconstructed block (e.g., a reconstructed picture block) is disclosed wherein a size of the filter is selected based on coding information. In an example, the coding information comprises any one of a block size, a prediction mode, motion information and residual information. In an example, the filter size is selected based on the block size being higher or lower than a value. In another example, the block size is selected based on the intra prediction mode (e.g., of the block to be filtered or of one of its reference blocks) being DC/Planar or angular. In another example, the block size is selected based on a position of a last significant DCT coefficient, e.g., based on the position being close or far from a top left position. In another example, the block size is selected based on motion information (e.g., based on an amplitude of a motion vector). The filter may a bilateral filter (BIF). The filter may be a sign plus shaped filter. The filtering method may be used by an encoding method (e.g., in an encoder) or by a decoding method (e.g., in a decoder).

BRIEF DESCRIPTION OF THE DRAWINGS

FIG. 1 illustrates a block diagram of a system within which aspects of the present embodiments may be implemented;

FIG. 2 illustrates a block diagram of an embodiment of a video encoder;

FIG. 3 illustrates a block diagram of an embodiment of a video decoder;

FIG. 4 illustrates examples of binary and ternary tree splits ;

FIG. 5 depicts an example of an 8x8 Transform Unit block and a filter aperture for a particular sample;

FIG. 6 illustrates a bilateral filtering (BIF) method wherein coefficient Look-up-table is used to obtain the weights of the filter;

FIG. 7 depicts one current sample and its four neighboring samples in a shape of a plus sign;

FIG. 8 depicts two windows covering two pixels ;

FIG. 9 depicts samples used in a weighted sum ;

FIG. 10 depicts the combination of a bilateral filtering with a sample adaptive offset (SAO) filtering ;

FIG. 11 depicts a diamond 5x5 filter kernel;

FIG. 12 depicts bilateral chroma filtering performed in parallel with the SAO filtering ;

FIG. 13 illustrates another example of the in-loop filtering flow with CCSAO (Cross Component SAO) and BIF;

FIG. 14 depicts an image partitioned into blocks according to an example ; and

FIGs 15-24 depict a flowchart of method of filtering a reconstructed block of samples according to various examples.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

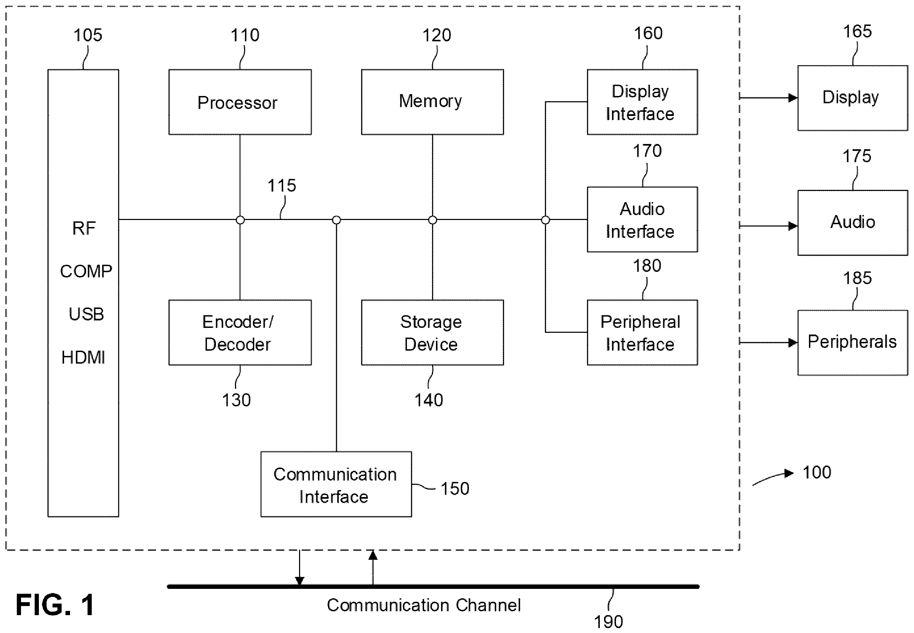

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side. In the present application, the terms "dequantization" and "scaling" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

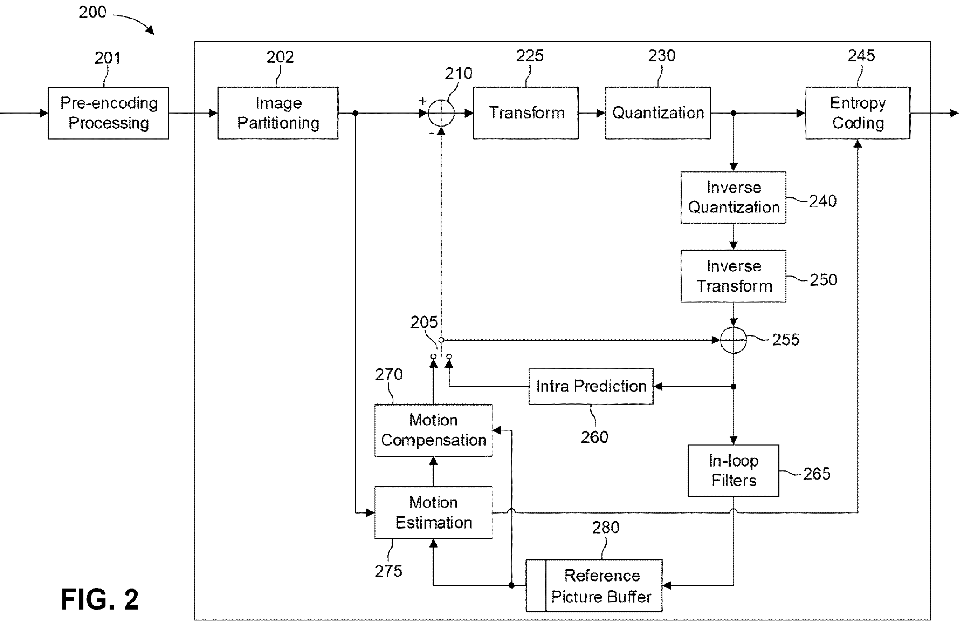

**FIG. 2** illustrates an example video encoder 200, such as a VVC (Versatile Video Coding) encoder. FIG. 2 may also illustrate an encoder in which improvements are made to the VVC standard or an encoder employing technologies similar to VVC.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 200, a picture is encoded by the encoder elements as described below. The picture to be encoded is partitioned (202) and processed in units of, for example, CTU (Coding Tree Units), CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes $c_q$ (a.k.a transform coefficient levels or quantized transform coefficients on the encoder side). The quantization levels (a.k.a quantization indexes) $c_q$, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ BIF (Bilateral Filtering)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders.

The quantization of the residuals (e.g., residual coefficients) may produce ringing artifacts around edges, both in still images and in moving objects in videos. Applying a bilateral filter (BIF) may significantly reduce ringing artifacts. BIF may be applied on decoded sample values (a.k.a. reconstructed sample values) directly after the inverse transform. In a variant, BIF may be applied on reconstructed samples (e.g. on reconstructed sample values) after the deblock filtering, e.g., with a larger filter and with an optimized Look-Up-Table (e.g., approximating the weights of the filter).

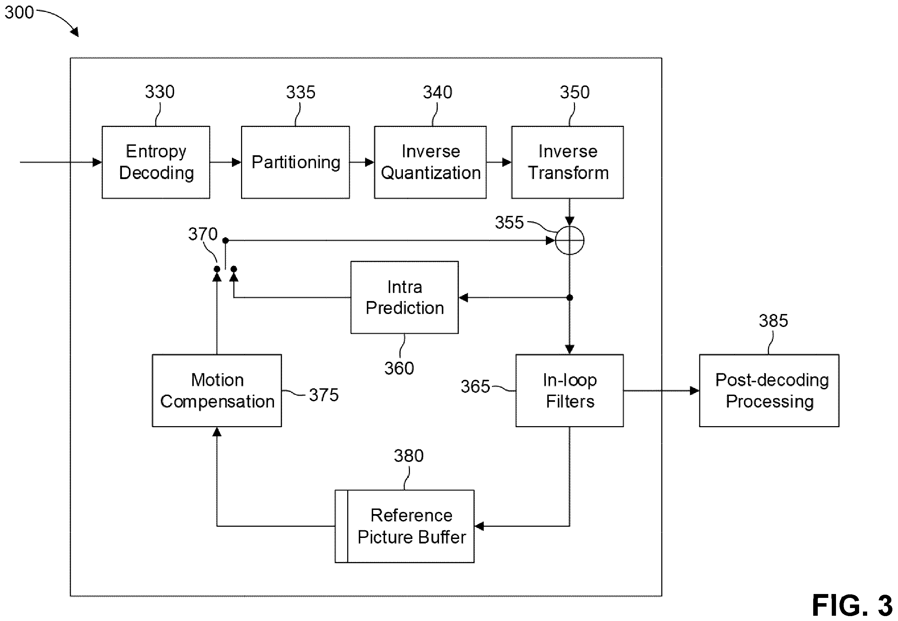

**FIG. 3** illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain quantization levels $c_q$ (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels $c_q$ are de-quantized (340) into reconstructed transform coefficients $c_r$. De-quantization is also named scaling. The reconstructed transform coefficients $c_r$ are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365), e.g., the same in-loop filters as applied on the encoder side (265), are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

As mentioned previously, one picture to be encoded may be divided or partitioned into multiple non-overlapping blocks or units, e.g., into Coding Tree Units (CTU). In an example, CTU size may be set up to 128×128 for luma samples, e.g., as in VVC.

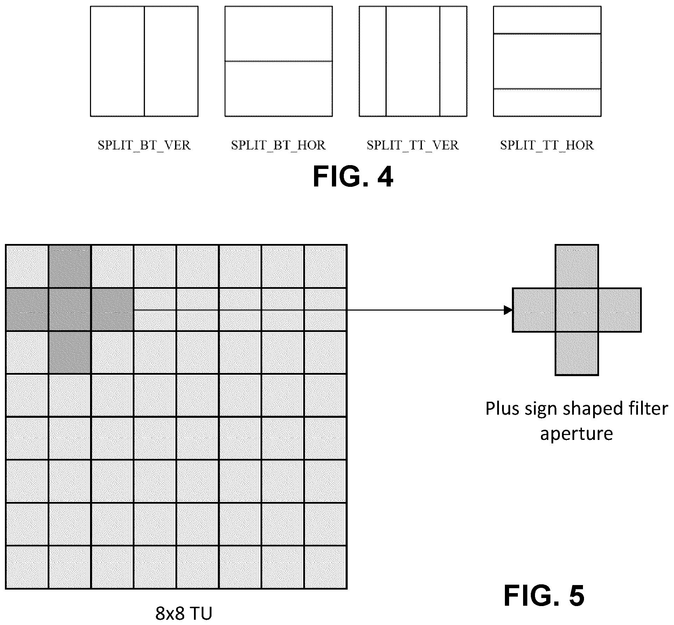

Each coding tree unit (CTU) may be either processed as one coding unit or split into multiple coding units (CUs) by one or more recursive quaternary tree (QTBT) partitions followed by one or more recursive multi-type tree splits, such as Binary Tree (BT) or Ternary Tree (TT). The multi-type tree splits can be horizontal binary tree split, vertical binary tree split, horizontal ternary tree split, or vertical ternary tree split as illustrated on **FIG. 4.** A CTU dual tree for intra-coded slices may be described on top of the block partitioning structure, that separates coding trees for luma and chroma. The splits (QTBT, BT or TT), applied to each CTU, resulting in one or multiple CUs, have square and rectangular shapes. They allow a better fit to local picture content characteristics and features.

By increasing the CTU size up to 128x128 for luma, the coding efficiency may be improved at the expense of an increased complexity. The size of each CU may be related to the information present in this CU, e.g., may be related to the rate distortion (RD) cost of the CU. The rate distortion (RD) cost of a candidate block may be calculated as follows: CostRD = D + Lambda(QP)*R, where D is a distortion (L2, i.e., mean square error) of the current block with its coding parameters, R is the associated rate (e.g., in number of coding bits) and Lambda(QP) is a Lagrange parameter, e.g., deduced from the quantization parameter QP. High QP generates less but larger CUs than small QP. Once the partitioning is completed during the coding stage, several features may be available for intra frames and for each CU such as an intra prediction mode, a code block flag (CBF), DCT transformed coefficients and a parameter Last_xy_sig. it indicates which prediction mode is used, for example planar or angular prediction

By increasing the CTU size up to 128x128 for luma, we can often improve the coding efficiency but also at the expense of increasing the complexity. The size of each CU is related to the information present in this CU, and more precisely is related to the rate distortion (RD) cost of the CU. The rate distortion (RD) cost of a candidate block is calculated as follows:

$$CostRD = D + Lambda(QP)R$$

where D is the distortion (L2, i.e., mean square error) of current block with its coding parameters, R is the associated rate (in number of coding bits) and Lambda(QP) is the Lagrange parameter deduced from the quantization parameter QP. High QP generates less but larger CUs than small QP. Once the partitioning is completed during the coding stage, several features are available for intra frames and for each CU such as an intra prediction mode, a code block flag (CBF), DCT transformed coefficients and a parameter Last_xy_sig. The intra prediction mode indicates which prediction mode is used, for example planar or angular prediction. The code block flag (CBF) indicates if residuals are added on top of the prediction, i.e. if the encoding result of a CU contains nonzero residuals. This flag may be coded per component. The DCT transformed coefficients are values of the transformed and quantized residuals coefficients. Last_xy_sig is a parameter that signals the position of the last significant coefficient inside a Transform Unit.

A bilateral filter may be derived from gaussian filters and applied to samples in the reconstructed picture. In an example, a sample (e.g., each sample) in the reconstructed picture may be replaced by a weighted average of itself and its neighbors. The weights may be calculated based on a distance from the center sample and on the difference in sample values. In the case where the filter is in the shape of a small plus sign as shown in **FIG. 5,** all of the distances are 0 or 1. FIG. 5 depicts an example of an 8x8 TU (Transform Unit) block and the filter aperture for the sample located at (1,1).

A sample located at (i, j), may be filtered using its neighboring sample (k, l). The weight $\omega(i, j, k, l)$ is the weight assigned for sample (k, l) to filter the sample (i, j), and it is defined as:

$$\omega(i, j, k, l) = e^{\left( - \frac{(i-k)^2 + (j-l)^2}{2\sigma_d^2} - \frac{\|I(i,j) - I(k,l)\|^2}{2\sigma_r^2} \right)} \qquad (Eq.\,1)$$

I(i, j) and I(k, l) are the original reconstructed intensity value of samples (i, j) and (k,l) respectively. $\sigma_d$ is the spatial parameter and $\sigma_r$ is the range parameter. The property (or strength) of the bilateral filter is controlled by these two parameters. Samples located closer to the sample to be filtered, and samples having smaller intensity difference to the sample to be filtered, will have larger weight than samples further away and with larger intensity difference. In this initial contribution, $\sigma_d$ is based on the transform unit size (Eq. 2), and $\sigma_r$ is based on the QP used for the current block (Eq. 3).

$$\sigma_d = 0.92 - \frac{\min(TU\ block\ width,\ TU\ block\ height)}{40} \qquad (Eq.\,2)$$

$$\sigma_r = max(\frac{(QP - 17)}{2}, 0.01) \qquad (Eq.\,3)$$

The bilateral filter may be applied to a TU block (e.g., to each TU block) directly after the inverse transform in both the encoder and the decoder. As a result of this, subsequent Intra-coded blocks will predict from the sample values that have been filtered with the bilateral filter. This also makes it possible to include the bilateral filter operation in the Rate-Distortion decisions in the encoder.

A sample (e.g., each sample) in the transform unit may be filtered using its direct neighboring samples only. The filter may have a plus sign shaped filter aperture centered at the sample to be filtered. The output filtered sample value $I_D(i, j)$ is thus calculated as:

$$I_D(i,j) = \frac{\sum_{k,l} I(k,l) * \omega(i,j,k,l)}{\sum_{k,l} \omega(i,j,k,l)} \qquad (Eq.4)$$

For TU sizes larger than $16 \times 16$, the block is treated as several $16 \times 16$ blocks using TU block width = TU block height = 16 in Equation 2. Also, rectangular blocks are treated as several instances of square blocks.

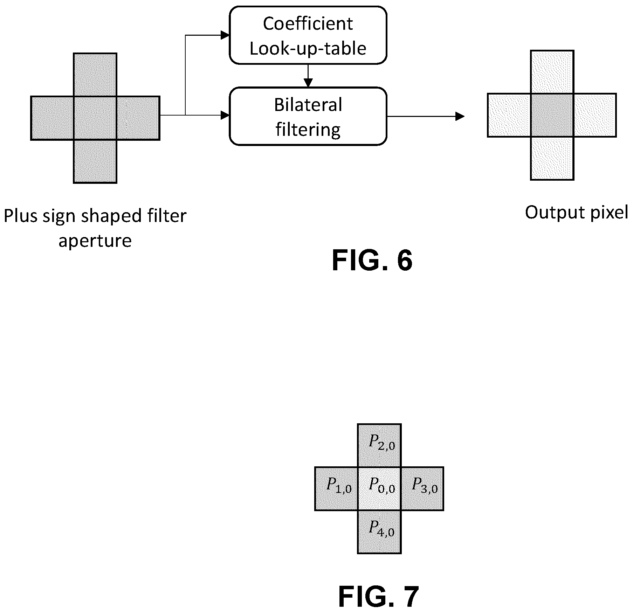

In order to reduce the number of calculations, the bilateral filter may be implemented using a look-up-table (LUT) storing all weights for a particular QP in a two-dimensional array. The LUT uses the intensity difference between the sample to be filtered and the reference sample as the index of the LUT in one dimension, and the TU size as the index in the other dimension. For efficient storage of the LUT, weights may be rounded to 8-bit precision. **FIG. 6** illustrates a bilateral filtering method wherein coefficient Look-up-table is used to obtain the weights of the filter.

The bilateral filter may be a five-tap filter in the shape of a plus sign, thus called plus-shaped filter. The strength of the filter may be based only on the TU size and QP.

In another example, the filter strength may be lower for blocks using inter prediction. Inter predicted blocks typically have less residual than intra predicted blocks and therefore it makes sense to filter less the reconstruction of inter predicted blocks. The filter strength for intra predicted blocks is set as before but for inter predicted blocks the following spatial weight may be used:

$$\sigma_d = 0.72 - \frac{\min(\text{TU block width, TU block height})}{40} \qquad (Eq.5)$$

The size of the lookup table (LUT) for the bilateral filter may be reduced. The goal of the LUT is to pre-calculate the weights of the bilateral filter:

$$\omega(i,j,k,l) = e^{\left(-\frac{(i-k)^2+(j-l)^2}{2\sigma_d^2} - \frac{\|I(i,j)-I(k,l)\|^2}{2\sigma_r^2}\right)}, \qquad (Eq.6)$$

so that the filtered pixel $I_F(i, j)$ can be calculated as:

$$I_F(i,j) = \frac{\sum_{k,l} I(k,l) * \omega(i,j,k,l)}{\sum_{k,l} \omega(i,j,k,l)}. \qquad (Eq.7)$$

For the center weight, i.e., the weight for the center pixel, $k = i$ and $j = l$. Hence $(i - k) = (j - l) = 0$ and $I(i, j) = I(k, l)$ which means that the center weight $\omega(i, j, i, j)$ is always 1.0. For all other weights, $(i - k)^2 + (j - l)^2 = 1$ since only the 4-neighbors of a pixel are included in the filtering (a "plus-shaped" filter kernel). Therefore,

$$\begin{cases} \omega_{center} = 1.0 \\ \omega_{other} = e^{\left(-\frac{1}{2\sigma_d^2} - \frac{\|I-I_c\|^2}{2\sigma_r^2}\right)} \end{cases}$$

where $I_c$ is the intensity of the center pixel. Since the center weight is always 1.0, no LUT is needed for it. For the other weights, it is possible to use a 3D LUT indexed over the following dimensions: Modes, QPs and Absolute intensity difference.

The variable $\sigma_d$ can take 6 different values depending upon the TU size and type of block; 3 each for intra blocks ($4\times4$, $8\times8$, and $16\times16$ blocks) and 3 for inter blocks ($4\times4$, $8\times8$, and $16\times16$ blocks). (Rectangular blocks use the smaller dimension). The variable $\sigma_r$ may be calculated from the QP value, and the filter is only turned on for QP 18 and higher: For QP 17 and lower $\sigma_r$ becomes too small to change the filtered value. Therefore, this dimension can take 34 different values (18 through 51). The absolute intensity difference value $\|I - I_c\|$ may take 1024 different values for 10-bit luma values. Each weight may be stored using an unsigned short. Thus, a brute force implementation would need 6*34* 1024*2 = 417 792 bytes of LUT memory.

In another example, the division is replaced with a multiplication and a lookup-table (LUT). To keep the size of the LUT as small as possible, from Eq.7 the nominator and the denominator of the division are set as small as possible. To reduce the nominator, the filtering equation is rewritten using differences. To reduce the denominator, the large center weight value for inter blocks of size 16×16 and larger is avoided by turning the filter off for these blocks. Since the filter (shape 2x2) only touches the center pixel and its 4-neighbors, this equation (Eq.7) can be written as

$$I_F = \frac{I_C \omega_C + I_L \omega_L + I_R \omega_R + I_A \omega_A + I_B \omega_B}{\omega_C + \omega_L + \omega_R + \omega_A + \omega_B}, \qquad (Eq.8)$$

where $I_C$ is the intensity of the center pixel, and $I_L$, $I_R$, $I_A$ and $I_B$ are the intensities for the left, right, above and below pixel respectively. Likewise, $\omega_C$ is the weight for the center pixel, and $\omega_L$, $\omega_R$, $\omega_A$ and $\omega_B$ are the corresponding weights for the neighboring pixels.

The nominator can become relatively big. Fortunately, it is possible to rewrite Equation 8 as

$$I_F = I_C + \frac{\omega_L \Delta I_L + \omega_R \Delta I_R + \omega_A \Delta I_A + \omega_B \Delta I_B}{\omega_C + \omega_L + \omega_R + \omega_A + \omega_B}, \qquad (Eq.9)$$

where $\Delta I_L = I_L - I_C$ and $\Delta I_R = I_R - I_C$, etc. When a large difference in intensity $\Delta I$ occurs, the bilateral filter will choose a small weight $\omega$. This means that the product $\Delta I * \omega$ will always be small, since either $\Delta I$ is small, or otherwise $\omega$ is small.

The denominator in Equation 9 is equal to $\omega_C + \omega_L + \omega_R + \omega_A + \omega_B$. The maximum value for the non-center weights $\omega_L$, $\omega_R$, $\omega_A$ and $\omega_B$ may be set to 31. The center weight can take the values mentioned in Table 1.

Table 1 - Center weight values based on the prediction mode and the TB length.

|  | min(TUwidth, TUheight) | | |
|---|---|---|---|
|  | 4 | 8 | 16 |
| intra | 65 | 81 | 196 |
| inter | 113 | 196 | 4079 |

In another example, a simplification is proposed for the bilateral filter. For each block, the inverse quantized transform coefficients are examined, and if they contain only one non-zero coefficient that is at the DC position, then bilateral filtering is skipped for the associated reconstructed block.

In another example, a new filtering process is proposed. Once bilateral filter is always applied to luma blocks with non-zero transform coefficients and slice quantization parameter larger than 17, therefore, there is no need to signal the usage of the bilateral filter. Bilateral filter, if applied, is performed on decoded samples right after the inverse transform. In addition, the filter parameters, i.e., weights are explicitly derived from the coded information. The filtering process (Eq.7) is rewritten as:

$$P'_{0,0} = P_{0,0} + \sum_{k=1}^{K} W_k (P_{k,0} - P_{0,0}) \times (P_{k,0} - P_{0,0}), \qquad (Eq.10)$$

where $P_{0,0}$ is the intensity of the current sample and $P'_{0,0}$ is the modified intensity of the current sample, $P_{k,0}$ and $W_k(\cdot)$ are the intensity and weighting parameter for the k-th neighboring sample, respectively. An example of one current sample and its four neighboring samples (i.e., K=4), in the shape of a plus sign, is depicted in **FIG. 7.**

More specifically, the weight $W_k(x)$ associated with the k-th neighboring sample is defined as follows:

$$W_k(x) = Distance_k \times Range_k(x) \qquad (Eq.11)$$

wherein

$$Distance_k = e^{\left(-\frac{10000}{2\sigma_d^2}\right)} \bigg/ 1 + 4 * e^{\left(-\frac{10000}{2\sigma_d^2}\right)}, \qquad (Eq.12)$$

$$Range_k(x) = e^{\left(-\frac{x^2}{8*(QP-17)*(QP-17)}\right)}$$

and $\sigma_d$ is dependent on the coded mode and coding block sizes. To further improve the coding performance, for inter-coded blocks, the intensity difference between current sample and one of its neighboring samples is replaced by a representative intensity difference among two windows covering current sample and the neighboring sample. Therefore, the equation of filtering process is changed to:

$$P'_{0,0} = P_{0,0} + \sum_{k=1}^{N} W_k \left(\frac{1}{M} \sum_{m=-M/2}^{M/2} abs(P_{k,m} - P_{0,m})\right) \times (P_{k,0} - P_{0,0}) \qquad (Eq.\,13)$$

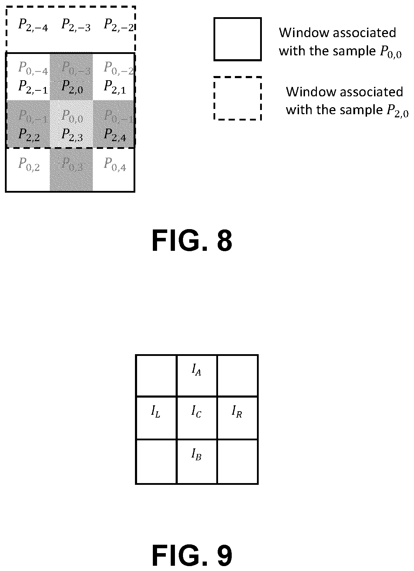

wherein $P_{k,m}$ and $P_{0,m}$ represent the m-th sample value within the windows centered at $P_{k,0}$ and $P_{0,0}$, respectively. In this proposal, the window size is set to 3×3. An example of two windows covering $P_{2,0}$ and $P_{0,0}$ are depicted in **FIG. 8.**

A spatial filter strength adjustment based on CU area size for bilateral filter may be used. Many studies focus on reducing the size of the LUT to approximate the numerator and denominator in the following equation :

$$I_F = I_C + \frac{w_L \Delta I_L + w_R \Delta I_R + w_A \Delta I_A + w_B \Delta I_B}{w_C + w_L + w_R + w_A + w_B}, \qquad (Eq.\,14)$$

where $I_F$ is the filtered sample, $I_C$ is the intensity of the center sample (the sample to be filtered), $I_L$, $I_R$, $I_A$ and $I_B$ are the intensity of the samples to the left, to the right, above and below respectively. **FIG. 9** depicts samples used in the weighted sum.

The delta values are differences against the center sample; $\Delta I_L = I_L - I_C$ and $\Delta I_R = I_R - I_C$, etc. The weights are calculated as follows :

$$w_X = e^{-\frac{1}{2\sigma_d^2} - \frac{|\Delta I_X|^2}{2\sigma_r^2}} \qquad (Eq.\,15)$$

where $X$ can be $A$, $B$, $L$ or $R$.

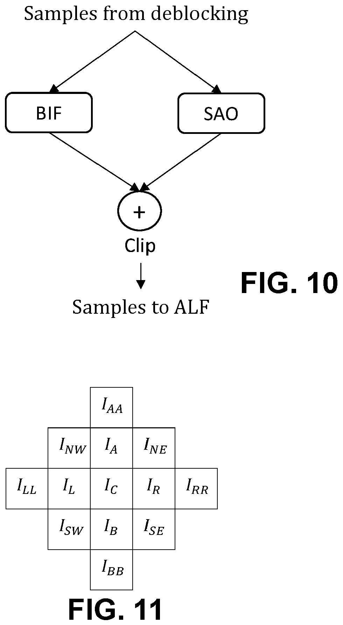

In an example depicted on **FIG. 10,** the bilateral filter may be combined with the sample adaptive offset (SAO) loop filter. The filter is carried out in the sample adaptive offset (SAO) loop-filter stage. Both the proposed bilateral filter (BIF) and SAO are using samples from the deblocking stage as input. Each filter creates an offset per sample, and these are added to the input sample and then clipped.

In detail, the output sample $I_{OUT}$ is obtained as follows :

$$I_{OUT} = clip3(I_C + \Delta I_{BIF} + \Delta I_{SAO}) \qquad (Eq.\,16)$$

where $I_C$ is the input sample from deblocking, $\Delta I_{BIF}$ is the offset from the bilateral filter and $\Delta I_{SAO}$ is the offset from SAO.

A diamond 5x5 filter kernel may be used together with 26 tables of 16 entries each, and that it is operating in the same loop-filter stage as SAO. **FIG. 11** depicts a diamond 5x5 filter kernel.

On this figure, I$C$ is the center and the samples surrounding the center sample are indicated by A, B, L and R that stands for above, below, left and right and where NW, NE, SW, SE stands for north-west etc. Likewise, AA stands for above-above, BB for below-below etc.

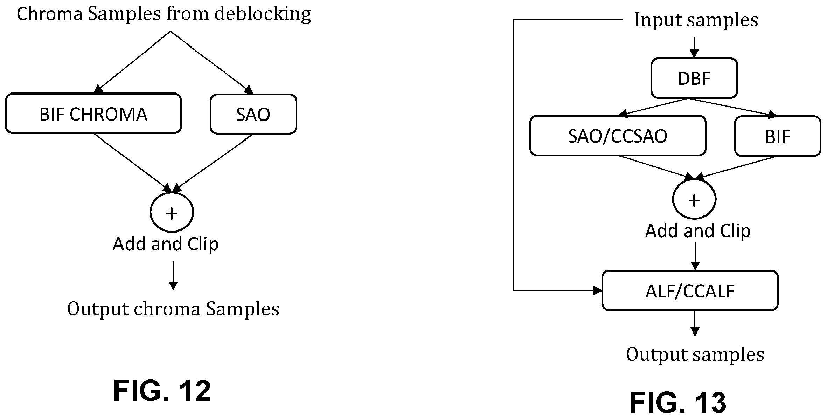

In another example, same as BIF-luma, BIF-chroma may be performed in parallel with the SAO process as shown in **FIG. 12.** The BIF-chroma and SAO may use the same chroma samples that are produced by deblocking filter as input and generate two offsets per chroma sample in parallel. Then these two offsets are both added to the input chroma sample to obtain a sum, which is then clipped to form the final output chroma sample value. The proposed BIF-chroma provides an on/off control mechanism on CTU level and slice level.

**FIG. 13** illustrates another example of the in-loop filtering flow with CCSAO (Cross Component SAO) and BIF. For each output sample, three offsets are calculated and clipped:

$$S_{OUT} = clip(S_{IN} + \delta_{SAO} + \delta_{CCSAO} + \delta_{BIF}). \qquad (Eq.\,17)$$

The BIF applied to an image **I** may be rewritten as follows :

$$\hat{I}[x,y] = \frac{\sum_{(i,j)\in\Omega(x,y)} I[i,j]w[i,j]}{\sum_{(i,j)\in\Omega(x,y)} w[i,j]} \qquad (Eq.\,18)$$

Where $\hat{I}[x, y]$ is the filtered image at (x,y), $w[i,j]$ is the coefficients of the bilateral filter and $I[i,j]$ is the reconstructed pixels in a window $\Omega$(x,y) centered at (x,y), where

$$w[i,j] = e^{\left(-\frac{(i-x)^2 + (j-y)^2}{2\sigma_d^2} - \frac{\|I(i,j) - I(x,y)\|^2}{2\sigma_r^2}\right)} \qquad (Eq.\,19)$$

$\Omega$(x,y) is a pixel window centered at (x,y), $\Omega$(x,y) may be equal to [x - $3\sigma_d$, x + $3\sigma_d$; y - $3\sigma_d$, y + $3\sigma_d$]. Other more truncated windows of $\Omega$(x,y) are possible, such as to [x - $\sigma_d$, x + $\sigma_d$; y - $\sigma_d$, y + $\sigma_d$] or [x - $2\sigma_d$, x + $2\sigma_d$; y - $2\sigma_d$, y + $2\sigma_d$].

The bilateral filtering adopts a low pass gaussian filter for both the domain filter ($\sigma_d$) and the range filter ($\sigma_r$).

The domain low pass filter gaussian filter gives higher weight to pixels that are spatially close to the center pixel. When the window $\Omega$(x,y) is highly truncated (e.g [x - ($\sigma_d$, x + $\sigma_d$; y - $\sigma_d$, y + $\sigma_d$]), all filter coefficients from domain filter are close to 1. The range low pass gaussian filter gives higher weight to pixels that are similar to the center pixel. Combining range filter and domain filter, the bilateral filter is an averaging along the edge, but it is reduced in the gradient direction. For this reason, it smooths the noise while preserving the edge.

In the previous examples, the BIF is mainly driven by the LUT of the BIF that depends on some coding info such as the QP, CBF flag (flag ON), prediction mode Inter/Intra, and BIF is applied only for CUs that are not too small and not too large.

The BIF filtering is not adaptive in terms of filter size. It has a fixed filter size whatever the CU characteristics, e.g. the filter is a shaped-plus filter of size 3 or of size 5. The main drawback is that if the window (e.g., the filter size) is too small in a uniform and large region, the smoothing or denoising will be too low and will have no effect. If the window (e.g., the filter size) is too high in the edge region, there is a risk that the smoothing or denoising may be too strong. When the filter shape is fixed and the LUT is fixed, BIF cannot fit to the signal in an optimal way.

In contrast, a method is disclosed that fit better the signal in edge or uniform region. The method adapts the BIF filter size (e.g., the plus sign shaped filter size) according to coding info (e.g., coding parameters). The coding info provides general information about the signal in the block, e.g., in the encoded CU. The BIF filter size may thus be adapted according to the block (e.g., CU) size and/or coding info to fit better the signal in edge or uniform region. From the coding info, filter size (e.g., plus sign shaped filter size) can be derived to fit to the signal in the block (e.g. in the CU). In an example, the BIF size is driven by the partitioning (CU size). In another example, the BIF filter size is driven by the residuals (e.g., CBF flag, Last_xy _sig). In another example, the BIF filter size is driven by the intra prediction mode (e.g., DC, planar, angular). In another example, the BIF filter size is driven by motion information (e.g., an amplitude of a motion vector).

If we consider a CU as an elementary block, small CU can reflect a rich information in this region such as edge, while large CU can reflect a uniform region. The block may also be a CTU or another block partitioning or region.

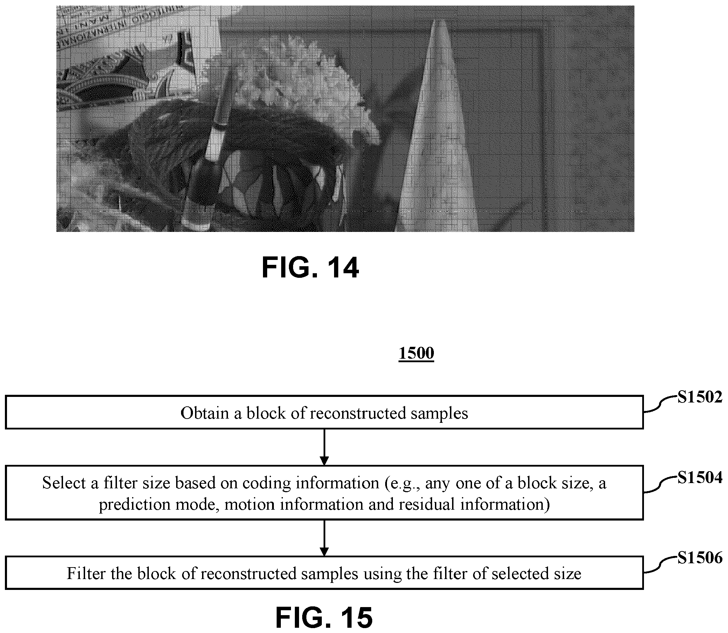

The block size selection is highly dependent on the QP value; higher and lower QP values imply selecting larger and smaller block sizes, respectively. Lower QP values preserve the image details, whereas higher QP values provide a higher compression rate at the expense of image quality losses. If the cost is not satisfying for a CU, this CU is split. The higher the QP, the larger the CUs. An example of block (CU) partitioning is presented in **FIG. 14.** The uniform regions, with low cost, may be localized in CUs with a large surface.

In all the following examples, the terms "block" and "CU" may be used interchangeably.

**FIG. 15** depicts a flowchart of method 1500 of filtering a reconstructed block of samples (a.k.a. a reconstructed block or a reconstructed picture block) according to an example. The method may be applied in the same way by an encoding method or a decoding method for in-loop filtering or for post-filtering. Indeed, the in-loop filters (265 on FIG. 2 and 365 on FIG. 3) are applied on the reconstructed samples in the decoding loop by both the encoder and decoder.

At S1502, a block of reconstructed samples is obtained. On the encoder side, the reconstructed samples may be obtained after block 255 of FIG.2 (e.g., after inverse quantization 240, inverse transform 250 and prediction 255). On the decoder side, the reconstructed samples may be obtained after block 355 of FIG. 3 (e.g., after inverse quantization 340, inverse transform 350 and prediction 355).

At S1504, a filter size is selected based on coding information (a.k.a coding parameters). The coding information may comprise any one of a block size, a prediction mode, motion information and residual information (e.g., CBF or position of last significant DCT coefficient). In an example, a filter of larger size may be selected for a block size above a value than for a block size below the value.

In an example, a filter of larger size may be selected for an intra block associated with DC or Planar mode than for a block associated with angular mode. The intra mode is a prediction mode used to obtain the block of reconstructed samples. In the case where the block of reconstructed samples is associated with an inter prediction mode, the intra mode may be the mode of a reference block.

In an example, a filter of larger size may be selected in a case where a last significant DCT coefficient is close to a top left position in the block (e.g., in the block of DCT coefficients) than for a case where the last significant DCT coefficient is far from the top left position in the block. The DCT coefficients are those that were used to obtain the block of reconstructed samples.

In another example, a filter of a first size may be selected to filter the block of reconstructed samples in a case where the size of the block is below a value, a filter of a second size may be selected to filter the block of reconstructed samples in a case where the size of the block is above the value and the intra mode of the block is DC or Planar, and a filter of a third size may be selected to filter the block of reconstructed samples in a case where the size of the block is above the value and the intra mode of the block is angular. The first size being lower than the second size, itself lower than the third size.

In yet another example, the filter size may be selected based on motion information, e.g., based on an amplitude or a direction of a motion vector. In an example, a filter of larger size may be selected for a motion vector of amplitude above a value than for an amplitude below the value. As an indicator of residuals, the value of CBF may be further used to activate or deactivate the filtering.

At S1506, the block of reconstructed samples is filtered using the filter of selected size.

All the examples below are described for a plus sign shaped filter. However, they may apply to filters of a different shape, e.g., diamond shape.

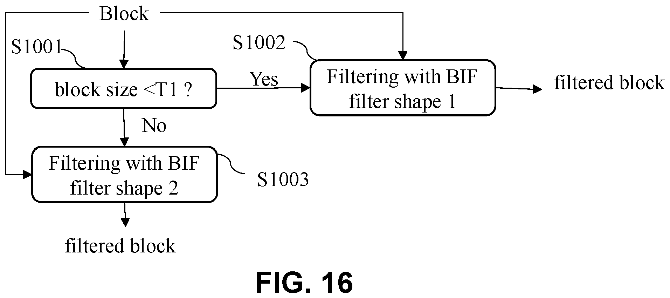

FIG. 16 depicts a flowchart of a filtering method according to an example. In this example, two (e.g., only two) filter sizes (e.g., filter shapes) are used. For example, one of size 3 and another one of size 5. The two BIF filters may be the filters depicted on FIG. 7 with a plus sign shaped filter size of 3 and on FIG. 11 with a plus sign shaped filter size of 5. Their corresponding LUT can also be used instead of the full analytic equation (Eq.18). Other filters are possible.

At S1001, the block (e.g., CU) size is compared to a value T1. The value T1, e.g., corresponding to a block size (e.g., CU size), drives which filter is used. In an example, T1 =1024 pixels which correspond to a block of size 32x32.

In the case where block size (e.g., CU size) is below T1, then, at S1002, a first BIF filter of a first size denoted BIF_filter_shape_1 (e.g., a plus sign shaped filter of size 3 or a 3x3 shaped filter) is chosen (e.g., selected or used).

Otherwise, a second BIF filter of a second size denoted BIF_filter_shape_2 (e.g., a plus sign shaped filter of size 5 or a 5x5 shaped filter) is chosen at S1003 (e.g., selected or used). The size of the second BIF filter may be different from the size of the first BIF filter, e.g. the second size may be larger than the first size. The same LUT as mentioned previously may be used.

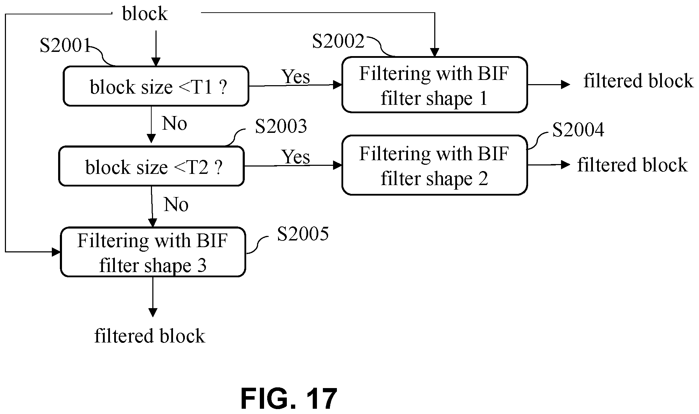

FIG. 17 depicts a flowchart of a filtering method according to another example. The filtering is refined per block (e.g., CU) region by increasing the number filters with different plus sign shaped filter size, e.g., plus sign shaped filter of sizes 3, 5 and 7.

At S2001, the block (e.g., CU) size is compared to a value T1. The value T1, e.g., corresponding to a block size (e.g., CU size) , drives which filter is used. In an example, T1 =1024 pixels which correspond to a block of size 32x32.

In the case where block size (e.g., CU size) is below T1, then, at S2002, a first BIF filter of a first size denoted BIF_filter_shape_1 (e.g., a plus sign shaped filter of size 3) is chosen (e.g., selected or used).

Otherwise (i.e., in the case where block size is above T1), the block (e.g., CU) size is compared to another value T2 at S2003. In an example, T2 =4096 pixels which correspond to a block of size 64x64.

In the case where block size is below T2, then, at S2004, a second BIF filter of a second size denoted BIF_filter_shape_2 (e.g., a plus sign shaped filter of size 5) is chosen (e.g., selected or used).

Otherwise, i.e., in the case where block size is above T2, then, at S2005, a third BIF filter of a third size denoted BIF_filter_shape_3 (e.g., a plus sign shaped filter size of size 7) is chosen (e.g., selected or used).

The first, second and third sizes may be different. In an example, the third size may be larger than the second size which may be larger than the first size.

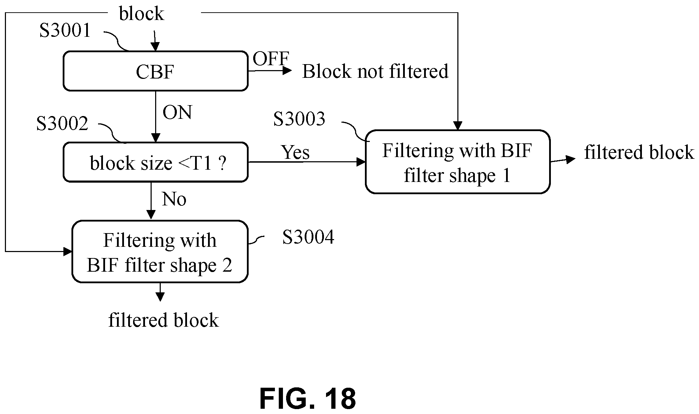

FIG. 18 depicts a flowchart of a filtering method according to another example. The filtering is refined per block (e.g., CU) region by increasing the number filters with different filter sizes, e.g., plus sign shaped filters of sizes 3, 5 and 7. The BIF filter size selection is driven by residuals and by block size (e.g. CU size).

At S3001, the value of CBF is obtained. CBF indicates whether the encoding result of the block (e.g., CU) contains nonzero residuals. If CBF is equal to 0 (OFF), the residual coefficients of the block do not need to be coded. In this case, we may consider that there is no difference between the reconstructed pixels and the original pixels in this block. It means that there is no need to apply BIF on this block. If CBF is equal to 1 (ON), the residual coefficients of the block need to be coded (decoded respectively). In this case, we may consider that there are differences between reconstructed pixels and the original pixels in this block. We can apply filters with different sizes (e.g., different plus sign shaped filter sizes) using the same partitioning driven strategy as depicted on FIGs 16 or 17.

At S3002, the block (e.g., CU) size is compared to a value T1. The value T1, e.g., corresponding to a block size/area, drives which filter is used. In an example, T1 =1024 pixels which correspond to a block of size 32x32.

In the case where block size (e.g., CU size) is below T1, then, at S3003, a first BIF filter of a first size denoted BIF_filter_shape_1 (e.g., a plus sign shaped filter size of 3) is chosen (e.g., selected or used).

Otherwise, a second BIF filter of a second size denoted BIF_filter_shape_2 (e.g., a plus sign shaped filter size of 5) is chosen at S3004 (e.g., selected or used). The second BIF filter size may be different from the first BIF filter size, e.g. the second size may be larger than the first size. The same LUT as mentioned previously may be used.

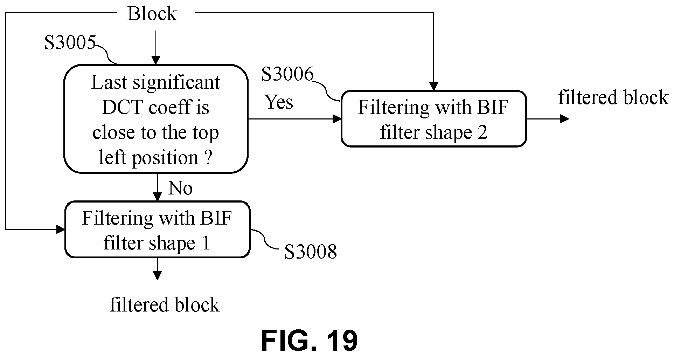

In a variant depicted on **FIG. 19,** Last_xy _sig syntax element (e.g., flag) may be used. Indeed, Last_xy_sig syntax element also gives information about the residuals since it corresponds to the position (x,y) of the last significant DCT coefficient in the block. If (x,y) is closed to the top left position in the block, the energy of the DCT coefficients is concentrated in low frequencies, i.e., this block is a uniform region.

The position of the last significant DCT coefficient in the block is compared to the top left position of the block. In the case where the position of the last significant DCT coefficient (e.g., of Last_xy_sig) is close to the top left position, e.g., located in the first 50% of DCT coefficients, the second BIF filter BIF_filter_shape_2 (with a shaped filter size of 5) is chosen at S3006. Otherwise (i.e., if the position of the last significant DCT coefficient (e.g., of Last_xy_sig) is far to the top left position, e.g., located after the first 50% of DCT coefficients), the first BIF filter BIF_filter_shape_1 (with a shaped filter size of 3) is chosen at S3008. In the example of FIG. 18, S3008 may be replaced by S3009, S3010 and S3010. In this case, when/if if the position of the last significant DCT coefficient (e.g., of Last_xy_sig) is far to the top left position, the block size is compared at S3009 with T1 and the filter size is selected based on this comparison.

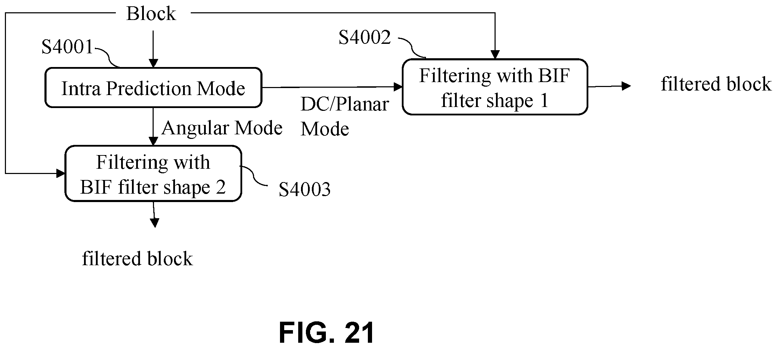

**FIG. 21** depicts a flowchart of a filtering method according to another example, wherein the BIF filter size is selected based on an intra prediction mode. The intra mode coding information of the block is read to check if the block (e.g., the CU) is coded with orientation information. Intra mode coding contains 6 Most Probable Modes. The Planar mode, which is always a Most Probable Mode (MPM), is coded first with a separate flag. The DC and the angular modes are coded using a list of the remaining five MPMs that are derived from intra modes of neighboring blocks. If the intra Mode is coded with angular mode, the block contains coded orientation propagation.

At S4001, intra prediction mode is obtained (e.g., for the block to be filtered) and compared with DC/Planar Mode. For blocks with DC and planar modes, which correspond to regions with a higher probability to be in uniform regions, a first BIF filter of a first size denoted BIF_filter_shape_1 (with a plus sign shaped filter size of 5) is chosen at S4002.

Otherwise, i.e., for blocks with angular modes, which correspond to blocks with high probability to have edges, a second BIF filter of a second size denoted BIF_filter_shape_2 (with a plus sign shaped filter size of 3) is chosen at S4003.

The second BIF filter size may be different from the first BIF filter size, e.g., the second size may be larger than the first size. The same LUT as mentioned previously may be used.

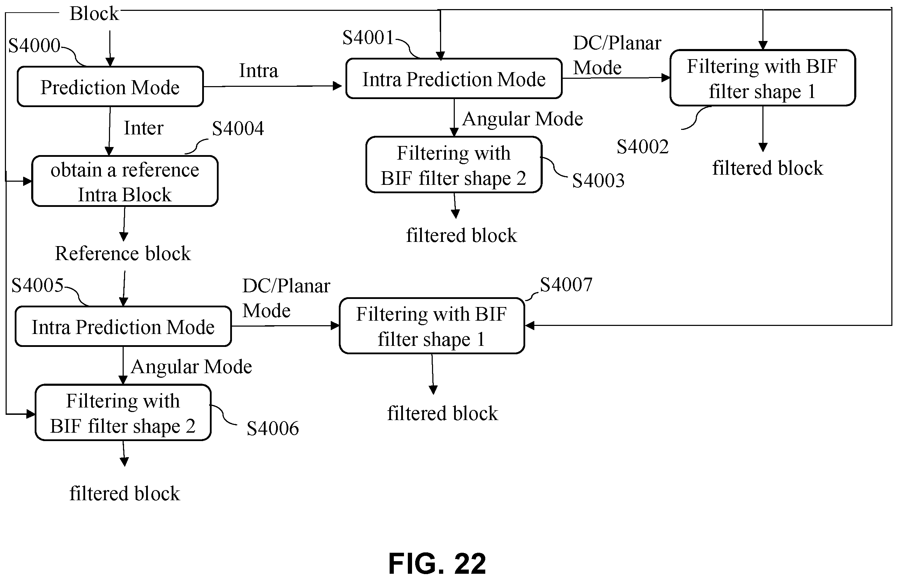

In an example depicted on **FIG. 22,** the prediction mode of the block is checked at S4000. If/when the block is inter coded, its reference block (if intra coded) may be obtained at S4004 and its intra prediction mode may be checked at S4005. The intra prediction mode of the reference block is compared with DC/Planar Mode and depending on the type of intra prediction mode, a first BIF filter of a first size denoted BIF_filter_shape_1 or a second BIF filter of a second size denoted BIF_filter_shape_2 is selected at S4007 and S4006 respectively.

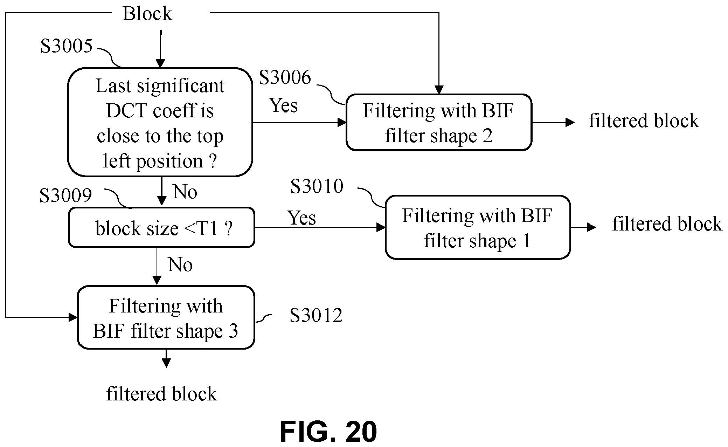

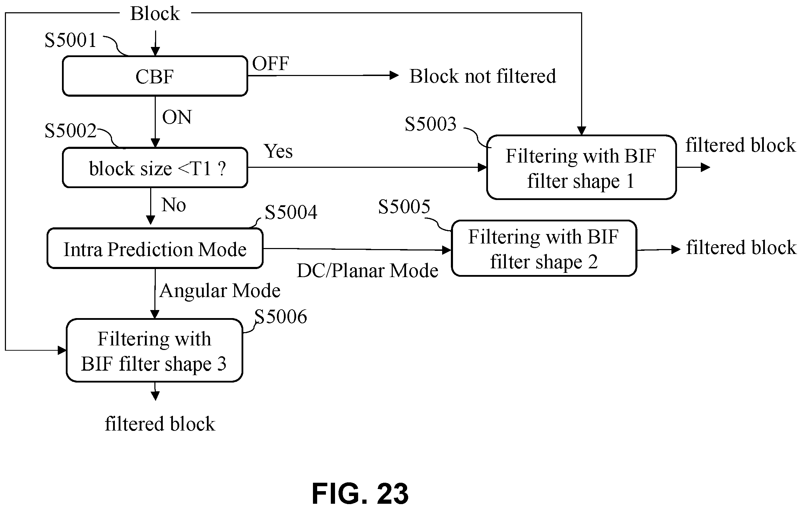

The methods disclosed with respect to FIGs 16-22 may be combined. **FIG. 23** depicts a flowchart of a filtering method according to another example, the BIF filter size is selected based on various coding information, e.g. CBF, block size, Intra prediction mode.

For example, from the block, the CBF value is checked at S5001. If the CBF is OFF (or if its value is null), the block is not filtered by the BIF. If the CBF is ON (or if its value is 1), it means that there are some residuals and BIF can be applied to enhance the signal. The size of the block is compared to a value T1 at S5002. If the block size is below T1 (e.g. 1024 pixels corresponding to 32x32), a first BIF filter of a first size denoted BIF_filter_shape_1 (e.g., with a plus sign shaped filter size of 3) is chosen at S5003. Otherwise, the Intra prediction mode is checked at S5004. For blocks coded with DC and planar modes, a second BIF filter of a second size denoted BIF_filter_shape_2 (e.g., with a plus sign shaped filter size of 5) is chosen at S5005. For blocks coded with angular modes, a third BIF filter of a third size denoted BIF_filter_shape_3 (e.g., with a plus sign shaped filter size of 7) is chosen at S5006. The first, second and third sizes may be different. In an example, the third size may be larger than the second size which may be larger than the first size.

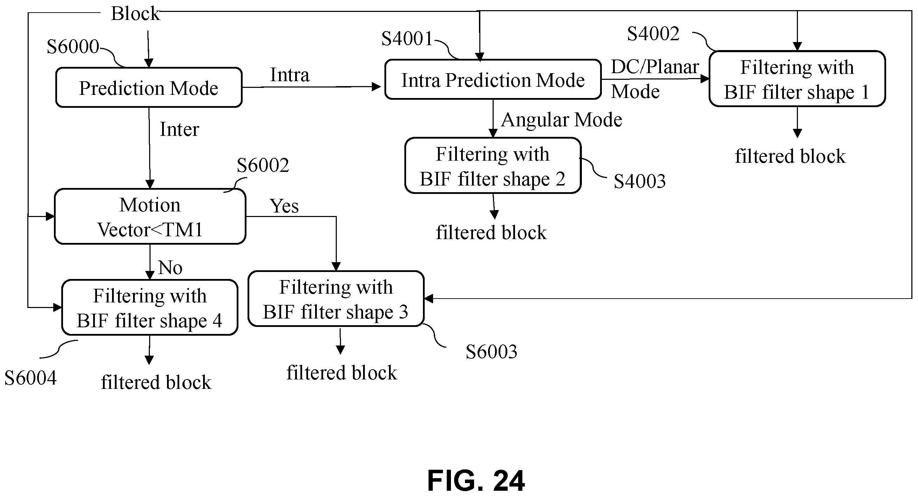

**FIG. 24** depicts a flowchart of a filtering method according to another example, wherein the BIF filter size is selected based on motion information.

At S6000, the prediction mode of the block to be filtered is checked. If the block is intra coded, then steps S4001, S4002 and S4003 of FIG. 21 apply.

If/when the block is inter coded, at least one motion vector (MV) is obtained and compared to a value TM1 at S6002.

In the case where the amplitude of the MV is below TM1, a third BIF filter denoted BIF_filter_shape_3 is chosen at S6003. In an example, the third BIF filter is the same as the first BIF filter. Otherwise, a fourth BIF filter denoted BIF_filter_shape_4 is chosen at S6004. In an example, the fourth BIF filter is the same as the second BIF filter.

In another example, the direction of the vector is checked instead of the amplitude or in addition to the amplitude.

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, etc., such as CBF, Last_xy_sig, and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, filtering a reconstructed block using a filter whose size is selected based on any one of a block size, an intra prediction mode and a residual information.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, filtering a reconstructed block using a filter whose size is selected based on any one of a block size, an intra prediction mode and a residual information.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated with a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Further, the terms "any of" or "any one of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Also, as used herein, the word "signal" refers to, among other things, indicating something to a corresponding decoder. For example, in certain embodiments the encoder signals a particular one of an intra mode, a position of a last significant DCT coefficient, a flag indicating whether the encoding result of the CU contains nonzero residuals. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

A decoding method is disclosed that comprises :

obtaining a block of reconstructed samples ;
selecting a filter size based on coding information ; and
filtering the block of reconstructed samples using a filter of selected filter size.

An encoding method is disclosed that comprises :

obtaining a block of reconstructed samples ;
selecting a filter size based on coding information ; and
filtering the block of reconstructed samples using a filter of selected filter size.

In an example, the coding information comprises any one of a block size, a prediction mode and residual information.

In an example, the residual information comprises a position of a last significant Discrete Cosine Transform (DCT) coefficient.

In an example, the residual information comprises a flag indicating whether residuals are added to a prediction to obtain the block of reconstructed samples.

In an example, the filter is a plus sign shape bilateral filter bilateral filter.

In an example, the coding information being a block size, selecting a filter size based on coding information comprises:

selecting a filter of a first size in a case where the block size is below a value ; and
selecting a filter of a second size in a case where the block size is above the value, the second size being larger than the first size.

In an example, the coding information being a position of a last significant Discrete Cosine Transform coefficient, selecting a filter size based on coding information comprises:

selecting a filter of a first size in a case where the position of the last significant DCT coefficient is far from a top left position ; and
selecting a filter of a second size in a case where the position of the last significant DCT coefficient is close from a top left position, the second size being larger than the first size.

In an example, the coding information being an intra prediction mode, selecting a filter size based on coding information comprises:

selecting a filter of a first size in a case of a DC intra prediction mode or a planar intra prediction mode; and
selecting a filter of a second size in a case of an angular intra prediction mode, the second size being larger than the first size.

In an example, the coding information being a motion vector, selecting a filter size based on coding information comprises:

selecting a filter of a third size in a case where an amplitude of the motion vector is below a value; and
selecting a filter of a fourth size in a case where an amplitude of the motion vector is above the value, the fourth size being larger than the third size.

In an example, the method comprises deactivating filtering of the block of reconstructed samples using the filter of selected size in a case where the flag indicates that no residual is added to the prediction.

**Claims**

1.  A decoding method comprising:

    obtaining a block of reconstructed samples ;
    selecting a filter size based on coding information ; and
    filtering the block of reconstructed samples using a filter of selected filter size.

2.  An encoding method comprising:

    obtaining a block of reconstructed samples ;
    selecting a filter size based on coding information ; and
    filtering the block of reconstructed samples using a filter of selected filter size.

3.  The method of claim 1 or 2, wherein the coding information comprises any one of a block size, a prediction mode, a motion vector and residual information.

4.  The method of claim 3, wherein the residual information comprises a position of a last significant Discrete Cosine Transform (DCT) coefficient.

5.  The method of any one of claims 1 to 4, wherein the filter is a plus sign shape bilateral filter bilateral filter.

6.  The method of any one of claims 1 to 5, wherein, the coding information being a block size, selecting a filter size based on coding information comprises:

    selecting a filter of a first size in a case where the block size is below a value ; and
    selecting a filter of a second size in a case where the block size is above the value, the second size being larger than the first size.

7.  The method of any one of claims 1 to 5, wherein, the coding information being a position of a last significant Discrete Cosine Transform coefficient, selecting a filter size based on coding information comprises:

    selecting a filter of a first size in a case where the position of the last significant DCT coefficient is far from a top left position ; and
    selecting a filter of a second size in a case where the position of the last significant DCT coefficient is close from a top left position, the second size being larger than the first size.

8.  The method of any one of claims 1 to 5, wherein, the coding information being an intra prediction mode, selecting a filter size based on coding information comprises:

    selecting a filter of a first size in a case of a DC intra prediction mode or a planar intra prediction mode; and
    selecting a filter of a second size in a case in a case of an angular intra prediction mode, the second size being larger than the first size.

9. The method of any one of claims 1 to 5, wherein, the coding information being a motion vector, selecting a filter size based on coding information comprises:

   selecting a filter of a third size in a case where an amplitude of the motion vector is below a value; and selecting a filter of a fourth size in a case where an amplitude of the motion vector is above a value, the fourth size being larger than the third size.

10. A decoding apparatus comprising one or more processors and at least one memory coupled to said one or more processors, wherein said one or more processors are configured to perform the method of claim 1.

11. An encoding apparatus comprising one or more processors and at least one memory coupled to said one or more processors, wherein said one or more processors are configured to perform the method of claim 2.

12. A computer program comprising program code instructions for implementing the method of claim 1 when executed by a processor.

13. A computer readable storage medium having stored thereon instructions for implementing the method of claim 2.

14. A signal comprising a bitstream, formed by performing the method of claim 2.

FIG. 1

EP 4 633 148 A1

FIG. 2

EP 4 633 148 A1

FIG. 3

SPLIT_BT_VER     SPLIT_BT_HOR     SPLIT_TT_VER     SPLIT_TT_HOR

# FIG. 4

8x8 TU

Plus sign shaped filter
aperture

# FIG. 5

Plus sign shaped filter
aperture

Output pixel

# FIG. 6

# FIG. 7

EP 4 633 148 A1

| $P_{2,-4}$ | $P_{2,-3}$ | $P_{2,-2}$ |
|---|---|---|
| $P_{0,-4}$ $P_{2,-1}$ | $P_{0,-3}$ $P_{2,0}$ | $P_{0,-2}$ $P_{2,1}$ |
| $P_{0,-1}$ $P_{2,2}$ | $P_{0,0}$ $P_{2,3}$ | $P_{0,1}$ $P_{2,4}$ |
| $P_{0,2}$ | $P_{0,3}$ | $P_{0,4}$ |

Window associated with the sample $P_{0,0}$

Window associated with the sample $P_{2,0}$

# FIG. 8

| | $I_A$ | |
|---|---|---|
| $I_L$ | $I_C$ | $I_R$ |
| | $I_B$ | |

# FIG. 9

Samples from deblocking

BIF

SAO

+

Clip

Samples to ALF

**FIG. 10**

EP 4 633 148 A1

| | | $I_{AA}$ | | |
|---|---|---|---|---|
| | $I_{NW}$ | $I_A$ | $I_{NE}$ | |
| $I_{LL}$ | $I_L$ | $I_C$ | $I_R$ | $I_{RR}$ |
| | $I_{SW}$ | $I_B$ | $I_{SE}$ | |
| | | $I_{BB}$ | | |

**FIG. 11**

Input samples → DBF → BIF / SAO/CCSAO → + (Add and Clip) → ALF/CCALF → Output samples

**FIG. 13**

Chroma Samples from deblocking → SAO / BIF CHROMA → + (Add and Clip) → Output chroma Samples

**FIG. 12**

# FIG. 14

**1500**

S1502 — Obtain a block of reconstructed samples

S1504 — Select a filter size based on coding information (e.g., any one of a block size, a prediction mode, motion information and residual information)

S1506 — Filter the block of reconstructed samples using the filter of selected size

# FIG. 15

EP 4 633 148 A1

Block

S1001

block size <T1 ?  →Yes→  Filtering with BIF filter shape 1  →  filtered block

S1002

No

Filtering with BIF filter shape 2  S1003

filtered block

**FIG. 16**

block

S2001 — block size <T1 ?

Yes → S2002 Filtering with BIF filter shape 1 → filtered block

No

S2003 — block size <T2 ?

Yes → S2004 Filtering with BIF filter shape 2 → filtered block

No

Filtering with BIF filter shape 3 S2005

filtered block

**FIG. 17**

**FIG. 18**

Block

S3005

Last significant
DCT coeff is
close to the top
left position ?

S3006
Yes

Filtering with BIF
filter shape 2

filtered block

No

Filtering with BIF
filter shape 1

S3008

filtered block

**FIG. 19**

Block

S3005

Last significant
DCT coeff is
close to the top
left position ?

S3006
Yes → Filtering with BIF
filter shape 2 → filtered block

No

S3009
block size <T1 ?

S3010
Yes → Filtering with BIF
filter shape 1 → filtered block

No

Filtering with
BIF filter shape 3    S3012

filtered block

**FIG. 20**

FIG. 21

Block

S4000 — Prediction Mode → Intra → S4001 — Intra Prediction Mode → DC/Planar Mode → Filtering with BIF filter shape 1

Inter → S4004 obtain a reference Intra Block

Intra Prediction Mode → Angular Mode → Filtering with BIF filter shape 2 — S4003

S4002

filtered block

Reference block

filtered block

S4005 — Intra Prediction Mode → DC/Planar Mode → S4007 Filtering with BIF filter shape 1

Angular Mode

Filtering with BIF filter shape 2 — S4006

filtered block

filtered block

**FIG. 22**

Block

S5001 → CBF → OFF → Block not filtered

ON

S5002 → block size <T1 ? → Yes → S5003 → Filtering with BIF filter shape 1 → filtered block

No

S5004 → Intra Prediction Mode → DC/Planar Mode → S5005 → Filtering with BIF filter shape 2 → filtered block

Angular Mode

S5006 → Filtering with BIF filter shape 3

filtered block

**FIG. 23**

**FIG. 24**

EP 4 633 148 A1

Europäisches
Patentamt

European
Patent Office

Office européen
des brevets

# EUROPEAN SEARCH REPORT

**Application Number**

EP 24 30 5551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/128243 A1 (WANG YING [SE] ET AL) 23 April 2020 (2020-04-23) | 1-5,7,8, 10-14 | INV. H04N19/117 |
| Y | * paragraph [0069] * | 9 | H04N19/139 |
| | * paragraph [0081] * | | H04N19/159 |
| | * paragraph [0135] - paragraph [0142] * | | H04N19/176 |
| | * paragraph [0176] * | | H04N19/513 |
| | ----- | | H04N19/593 |
| X | US 2024/080455 A1 (LIM SUNG CHANG [KR] ET AL) 7 March 2024 (2024-03-07) | 1-3,6,8, 10-14 | H04N19/625 H04N19/82 |
| | * paragraph [0140] * | | |
| | * paragraph [0360] - paragraph [0363] * | | |
| | ----- | | |
| Y | US 2019/028703 A1 (TAMSE ANISH [KR] ET AL) 24 January 2019 (2019-01-24) | 9 | |
| | * paragraph [0084] * | | |
| | ----- | | |

**TECHNICAL FIELDS SEARCHED (IPC)**

H04N

The present search report has been drawn up for all claims

| Place of search | Date of completion of the search | Examiner |
|---|---|---|
| Munich | 20 September 2024 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5551

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | | Publication date |
|---|---|---|---|---|
| US 2020128243 A1 | 23-04-2020 | CN | 109792541 A | 21-05-2019 |
| | | EP | 3523977 A1 | 14-08-2019 |
| | | US | 2020128243 A1 | 23-04-2020 |
| | | WO | 2018067051 A1 | 12-04-2018 |
| US 2024080455 A1 | 07-03-2024 | CN | 111434109 A | 17-07-2020 |
| | | CN | 116684615 A | 01-09-2023 |
| | | CN | 116684616 A | 01-09-2023 |
| | | CN | 116684617 A | 01-09-2023 |
| | | CN | 116684618 A | 01-09-2023 |
| | | CN | 116684619 A | 01-09-2023 |
| | | CN | 116684620 A | 01-09-2023 |
| | | CN | 117176958 A | 05-12-2023 |
| | | CN | 117201794 A | 08-12-2023 |
| | | CN | 118075473 A | 24-05-2024 |
| | | CN | 118101949 A | 28-05-2024 |
| | | CN | 118101950 A | 28-05-2024 |
| | | CN | 118118675 A | 31-05-2024 |
| | | CN | 118413645 A | 30-07-2024 |
| | | CN | 118413646 A | 30-07-2024 |
| | | CN | 118413647 A | 30-07-2024 |
| | | CN | 118413648 A | 30-07-2024 |
| | | CN | 118413649 A | 30-07-2024 |
| | | CN | 118413650 A | 30-07-2024 |
| | | CN | 118413651 A | 30-07-2024 |
| | | CN | 118413652 A | 30-07-2024 |
| | | CN | 118413653 A | 30-07-2024 |
| | | CN | 118413654 A | 30-07-2024 |
| | | CN | 118413655 A | 30-07-2024 |
| | | CN | 118413656 A | 30-07-2024 |
| | | CN | 118413657 A | 30-07-2024 |
| | | CN | 118413658 A | 30-07-2024 |
| | | CN | 118413659 A | 30-07-2024 |
| | | CN | 118413660 A | 30-07-2024 |
| | | CN | 118413661 A | 30-07-2024 |
| | | CN | 118413662 A | 30-07-2024 |
| | | CN | 118413663 A | 30-07-2024 |
| | | CN | 118413664 A | 30-07-2024 |
| | | CN | 118413665 A | 30-07-2024 |
| | | CN | 118413666 A | 30-07-2024 |
| | | CN | 118413667 A | 30-07-2024 |
| | | CN | 118413668 A | 30-07-2024 |
| | | CN | 118413669 A | 30-07-2024 |
| | | CN | 118413670 A | 30-07-2024 |
| | | EP | 3737093 A1 | 11-11-2020 |
| | | KR | 20190062302 A | 05-06-2019 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.** EP 24 30 5551

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | | Publication date |
|---|---|---|---|---|
| | | KR | 20230074102 A | 26-05-2023 |
| | | KR | 20230074681 A | 31-05-2023 |
| | | KR | 20230107196 A | 14-07-2023 |
| | | KR | 20230107197 A | 14-07-2023 |
| | | KR | 20230107198 A | 14-07-2023 |
| | | KR | 20230107199 A | 14-07-2023 |
| | | KR | 20230107531 A | 17-07-2023 |
| | | KR | 20230132419 A | 15-09-2023 |
| | | KR | 20230132420 A | 15-09-2023 |
| | | US | 2020413069 A1 | 31-12-2020 |
| | | US | 2022070474 A1 | 03-03-2022 |
| | | US | 2023353755 A1 | 02-11-2023 |
| | | US | 2023362389 A1 | 09-11-2023 |
| | | US | 2023370613 A1 | 16-11-2023 |
| | | US | 2023370614 A1 | 16-11-2023 |
| | | US | 2023370615 A1 | 16-11-2023 |
| | | US | 2023370616 A1 | 16-11-2023 |
| | | US | 2024080454 A1 | 07-03-2024 |
| | | US | 2024080455 A1 | 07-03-2024 |
| | | WO | 2019107911 A1 | 06-06-2019 |
| US 2019028703 A1 | 24-01-2019 | CN | 108476319 A | 31-08-2018 |
| | | EP | 3383040 A1 | 03-10-2018 |
| | | KR | 20180093950 A | 22-08-2018 |
| | | US | 2019028703 A1 | 24-01-2019 |
| | | WO | 2017122997 A1 | 20-07-2017 |

For more details about this annex : see Official Journal of the European Patent Office, No. 12/82

EPO FORM P0459

page 2 of 2